# EUROPEAN PATENT SPECIFICATION

(11) **EP 0 284 401 B1**
(45) Date of publication and mention of the grant of the patent: **02.06.1993**
(21) Application number: 88302634.6
(22) Date of filing: 24.03.1988
(51) Int. Cl.: H04M 1/00, H04M 1/65

(54) **Telephone equipment with multiple function**
Fernsprechvorrichtung mit mehreren Funktionen
Equipement téléphonique à fonctions multiples

(30) Priority: 24.03.1987 JP 70009/87
(43) Date of publication of application: 28.09.1988
(73) Proprietor: HASHIMOTO CORPORATION, Setagaya-ku, Tokyo 154 (JP)
(72) Inventor: Hashimoto, Kazuo, Setagaya-ku Tokyo 154 (JP)
(74) Representative: Beresford, Keith Denis Lewis

(56) References cited:
- GB-A- 2 160 390
- US-A- 3 822 364
- PATENT ABSTRACTS OF JAPAN, vol. 11, no. 190 (E-517)[2637], 18th June 1987 & JP-A-62 18 859
- PATENT ABSTRACTS OF JAPAN, vol. 10, no. 347 (E-457)[2403], 21st November 1986, page 9 E 457 & JP-A-61 147 662
- PATENT ABSTRACTS OF JAPAN, vol. 10, no. 244 (E-430)[2300], 22nd August 1986 & JP-A-61 74 440
- PATENT ABSTRACTS OF JAPAN, vol. 8, no. 66 (E-234)[1503], 28th March 1984 & JP-A-58 215 850
- FUNKSCHAU, no. 7, March 1983, pages 61-63, Munich, DE;H.-G. LÜHMANN et al.: "Digitaler Anrufbeantworter: Sprach-Menü"
- PATENT ABSTRACTS OF JAPAN, vol. 10, no. 217 (E-423)[2273], 29th July 1986 & JP-A-61 54 749

## Description

The present invention concerns telephone equipment having means of dialling using dual tone multifrequency (DTMF) tone signals and incorporating an additional device that can be controlled by remote control by signals from an external source over an outside telephone line by pushing DTMF tone buttons of the external source, and manually and independently of the outside telephone line by pushing the DTMF tone buttons of the equipment.

The invention is particularly applicable to telephone set equipment having multiple function capability, e.g. capabilities of off-hook and on-hook dialling, speed dialling, repeat dialling and including mute and flash buttons etc.

When an additional device such as a tape recorder or telephone answering device is included in the telephone set equipment, inconvenience can arise due to increase in the number of buttons supplied for performing all functions. The proliferation of buttons and/or codes can be most confusing to the user. Also in conventional telephone sets provided with additional devices such as tape recorders or telephone answering devices it is generally inconvenient that the user cannot operate these during line connection.

Patent Abstracts of Japan, Vol. 8, No. 66 (E-234)[1503], 28 March 1984; and JP-A-58215850 concerns integration of a telephone set and a sub-miniature tape recorder. The sub-miniature tape recorder is built in to the casing of the telephone set. The dialling key pad, as well as providing dial tones for outside dialling, is also used to provide signals for controlling the functions of the tape recorder. Recording is started by pressing one of the dial pad buttons before the hand set is removed and whilst the telephone set is in its on-hook mode. Recording will then continue when the handset is removed and the telephone set is in its off-hook mode. Recording is halted after the handset is replaced, the telephone set is returned to its on-hook mode and subsequently a button of the dial pad is depressed. It will be noted that the recording functions are controlled only whilst the telephone set is on-hook.

Patent Abstracts of Japan, Vol. 10, No. 347 (E-457)[2403], 21 November 1986, page 9; and JP-A-61147662 also describes a telephone equipment incorporating an additional device, in particular a telephone answering device. The tape recorder part of this device can be operated under the control of the dial key pad. This latter is performed without passing the telephone line. Provision is also made so that the recorder part of the telephone answering device can be controlled by remote signalling. The same dial operations can be used for remote and local operation.

The present invention is intended to provide a telephone set equipment including an additional device in which operation of the device is both easy and safe and can be performed by using the same codes whether operation is remote or manual. The invention also provides a telephone set equipment in which operation of the additional device can be performed manually during line connection.

In accordance with the present invention there is provided a telephone equipment having means of dialling using dual-tone multifrequency (DTMF) tone signals, and incorporating an additional device that can be controlled by remote control by signals from an external source over an outside telephone line by pushing DTMF tone buttons of the external source, and manually and independently of the outside telephone line by pushing DTMF tone buttons of said equipment of the same numeral or sign as those for remote control operation of the additional device over the outside telephone line characterised by:
means for enabling said additional device to be selectively controlled by remote control from the remote source and by the pushing of the DTMF tone buttons of said telephone equipment whilst a talking circuit on the telephone line is maintained between the telephone equipment and the remote source.

Since the same signal codes can be used both for remote and local signalling, use of the equipment is much simplified and user confusion is obviated. Also the present invention is advantageous since the additional device can be operated during line connection either remotely or by local manual control.

Conveniently a hook switch can be provided between an input to a decoder amplifier of the telephone set and equipment earth. Alternatively a transistor switch can be interposed between the hook switch of the telephone set and equipment earth and this transistor switch can be controlled by a line polarity inversion detective circuit. In both these instances the additional device is made independent of the outside telephone line during dialling operation. Actuation of the control functions of the additional device therefore is prevented.

Other features and advantages of the present invention will become apparent from the following description when taken in conjunction with the accompanying drawings in which preferred embodiments of the present invention are shown by way of illustrative example.

In the accompanying drawings:
Fig. 1 is a circuit diagram which shows the main part of conventional telephone set with multiple function;
Fig. 2 is a circuit diagram which shows the main part of the present invention;
Fig. 3 is a circuit diagram which shows the operation section of a preferred embodiment;
Fig. 4 is a circuit diagram which shows the detail of another preferred embodiment;
Figs. 5a and 5b are diagrams in case of a cordless phone; and
Fig. 6 is a circuit diagram of the main part including a solid-state recording/playback device.

### DESCRIPTION OF THE PREFERRED EMBODIMENTS

The arrangement and operations in the preferred embodiments of the present invention will be now described.

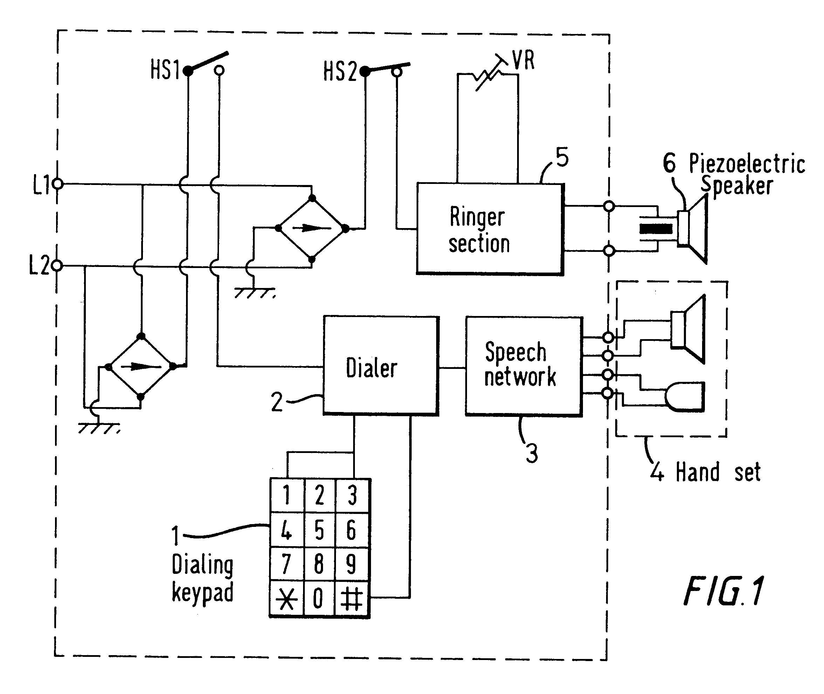

Referring to FIG. 1 which shows the main part of conventional telephone set with multiple function, reference numeral 1 denotes a dialing (ten-key) keypad; 2 denotes a dialer which generates a corresponding dial pulse or DTMF tone to lines L1 and L2 when a dialing key on said dialing keypad is turned on by a switch (not shown).

Reference numeral 3 denotes a speech network which enables establishing voice circuit through a handset 4. It is also possible to speak with the handset on hook by a switch (not shown).

Reference numeral 5 denotes a ringer for amplifying a tone ringer through a compressed terminal speaker 6 which receives a ringing signal.

Reference symbols HS1 and HS2 denote hook switches.

As described above, FIG. 1 shows only the main part of the telephone set with multiple function, wherein the DTMF tone generated in response to pushing of the dial key is used for making a call to a called party, and not for controlling a device incorporated in the telephone set.

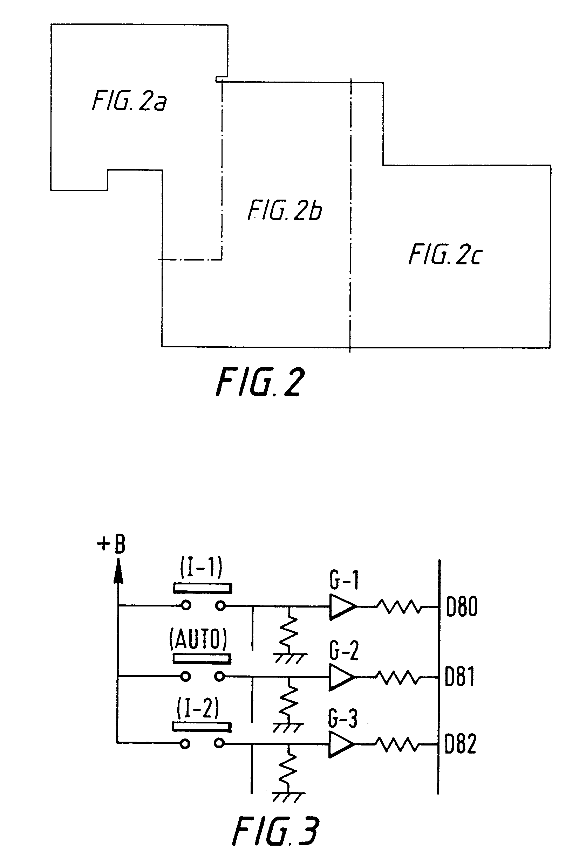

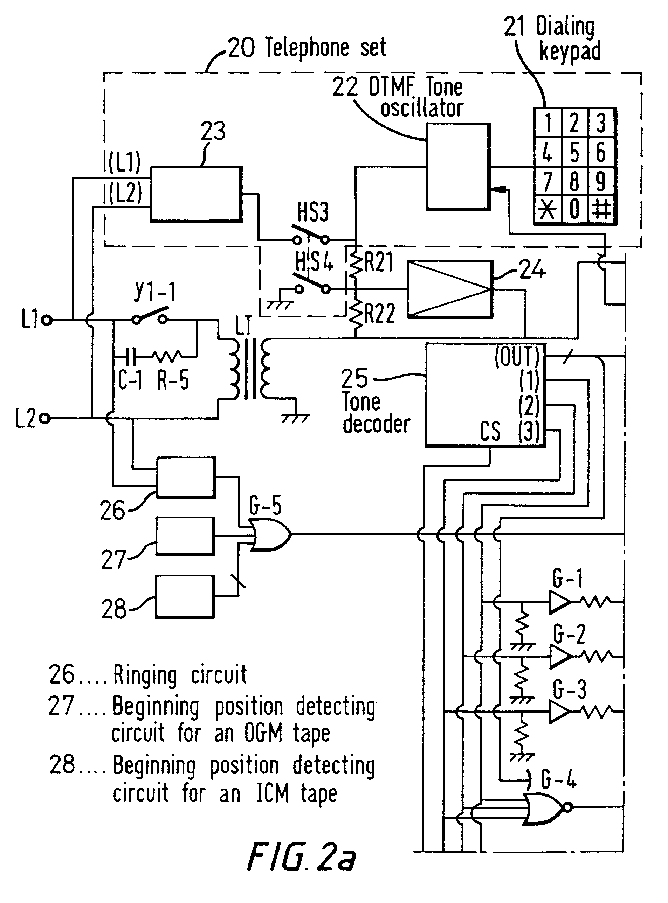

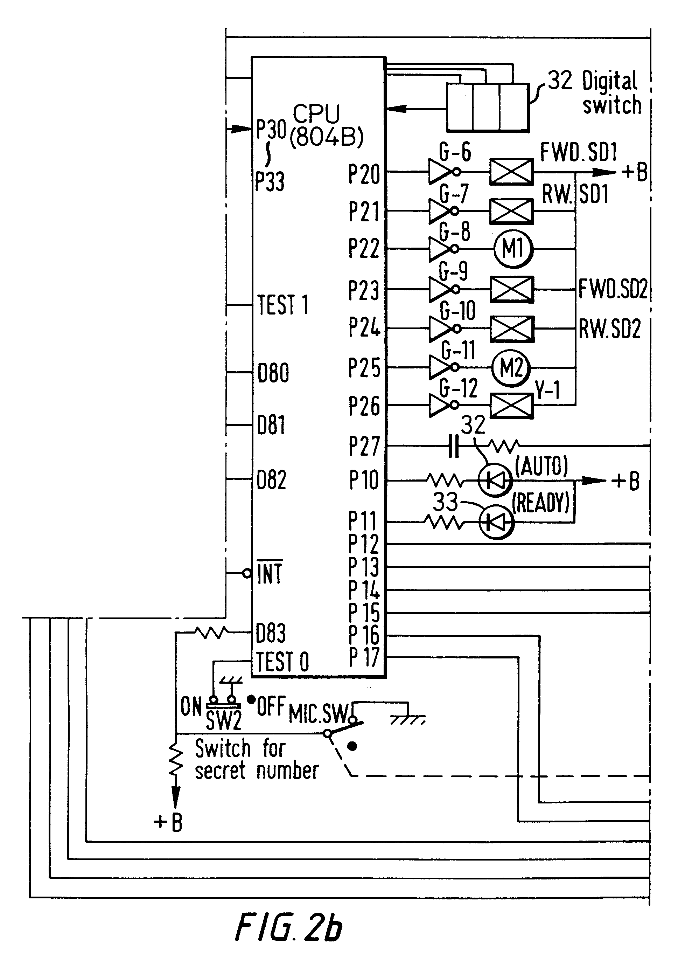

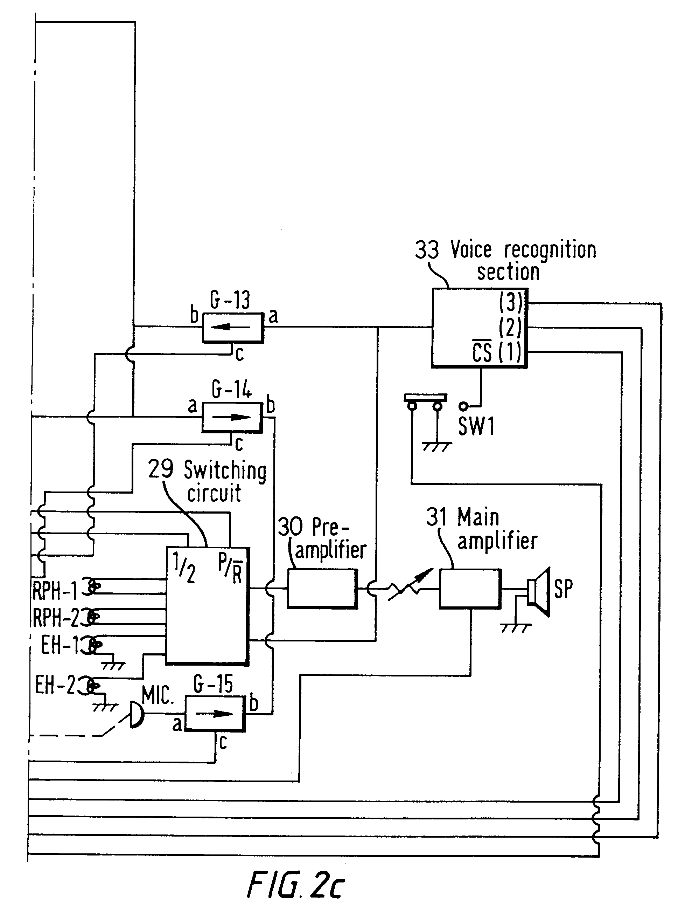

However, according to the present invention as shown in FIG. 2. it is possible to operate the device in the telephone set manually at home in same way as remote control operation by using some of ten-key buttons on the dialing keypad of an outside push phone.

Referring to FIG. 2. reference numeral 20 denotes a telephone set wherein only main part in connection with the present invention is shown in the figure. Reference symbols HS3 and HS4 denote hook switches added to the conventional telephone set, which switch the mode to off-hook or on-hook according to an off-hook button (monitor button) not shown or the handset. Reference numeral 21 denotes a dialing keypad of said telephone set; 22 denotes a DTMF oscillator of said telephone set: 24 denotes an amplifier for amplifying an output from said DTMF oscillator 22 or a DTMF tone from the outside push phone by the calling party: and 25 denotes a tone decoder for decoding said DTMF tone, wherein an output terminal (1) generates II level output while a "1" tone of the DTMF tone is being inputted, and similarly output terminals (2) and (3) generate H level output respectively while each of "2" and "3" tones is being inputted.

Said output of (1), (2) and (3) supplies the interrupt to an one chip microcomputer through an OR gate G-4. At the same time, said output is applied to input terminals D80, D81 and D82 of the microcomputer through buffers G-1. G-2 and G-3 and the code at the time of interrupt is discriminated.

Reference symbol CPU denotes an one chip microcomputer (microprocessor), wherein D80 to D83 are input terminals. P10 to P17 and P20 to P27 are output terminals (output ports), I̅N̅T̅ is an interrupt terminal and TEST1 is an input terminal connected to a counter incorporated in the CPU.

Reference symbols G-6 to G-12 denote drivers; FWD.SD1 and RW.SD1 denote solenoids for forwarding and rewinding an outgoing message (hereinafter called as OGM) recording medium (not shown), respectively; and M1 denotes a motor.

And similarly, reference symbols FWD.SD2 and RW.SD2 denote solenoids for an incoming message (hereinafter called as ICM) recording medium (not shown) and M2 denotes a motor for the ICM recording medium.

Reference symbol Y-1 denotes a relay for engaging telephone lines. Reference numeral 26 denotes a ringing circuit for detecting a ringing signal; and 27 and 28 denote beginning position detecting circuits for an OGM and an ICM tapes. The output of said circuits is inputted to the terminal TEST1 of the CPU through an OR gate G-5.

Reference numeral 29 denotes a recording/playback switching circuit of said OGM and said ICM tapes, comprising an analog switch and a relay. When an input terminal 1/2 thereof is H level, heads (RPH-1 and EH-1) of the OGM tape are selected and when said terminal 1/2 is L level, heads (RPH-2 and EH-2) of the ICM tape are selected. And further, said circuit 29 switches the mode to playback when a terminal P/R̅ is H level, and to recording when said terminal P/R̅ is L level.

Reference symbol SW1 denotes a switch for selecting whether the device in the telephone set is controlled by the DTMF tone from the push phone or a voice recognition: and SW2 denotes a switch for selecting whether or not a security code is used in the same way as in case of remote control operation when the device in the telephone set is manually controlled at home (hereinafter said switch is called as a security code switch).

The tape is used in the present embodiment. However, according to the present invention the tape is not always used and it is possible to use a solid-state recording/playback circuit with RAM (random access memory). In this case, components such as said solenoid or motor which require electric power are not necessary, so it is possible to control the device by small amount of electric power.

Operations will be now described.

In an embodiment of the present invention, a telephone answering device is included in the telephone set as shown in FIG. 1. The basic circuit thereof is disclosed in JAPAN S60-230754 A by the present applicant. In said prior art, operation buttons (I-1), (AUTO), and (I-2) are connected to input side of the buffers G-1, G-2 and G-3 shown in FIG. 2 of the present invention. When the operation button (I-1) is pushed once, the OGM tape is forwarded at normal speed. When said button is pushed successively twice during a predetermined period of time, the OGM tape is rewinded. When said button is pushed successively three times during the predetermined period of time, the OGM tape is fast forwarded. The ICM tape is forwarded at normal speed, rewinded and fast forwarded by pushing the operation button (I-2) in the same way as the button (I-1) in case of the OGM tape described above.

In order to driven the OGM or ICM tape in the recording mode, the operation button (AUTO) is pushed once, and then during a predetermined period of time, for instance, within 1.5 seconds the button (I-1) or (I-2) is pushed once.

In order to set the device to the standby mode for automatically answering and recording, the operation button (AUTO) is only pushed once without pushing any button any more, then after said 1.5 seconds the device is set to the standby mode ready for an incoming call.

When the operation button (AUTO) is pushed once and then during said predetermined period of time the operation button (I-1) or (I-2) is pushed successively twice or three times, the OGM or ICM tape is erased in the rewind or fast forward mode.

In order to release the operation described above the button for said operation is pushed once.

In the prior art, these three buttons (I-1), (AUTO) and (I-2) are used for the operation described above; whereas in the present invention, said operation buttons (I-1), (AUTO) and (I-2) are omitted and push phone buttons on the telephone set are used commonly for dialing and for operating.

In the present embodiments, a key "1" on the dialing keypad 21 shown in FIG. 2 corresponds to said operation button I-1), a key "2" to said button (AUTO), and a key "3" to said button I-2).

Manual operation at home will be now described. Said manual operation is described in detail in above prior art with reference to the flow chart, so the difference of the present invention from the prior art will be described in detail without the flow chart.

It is assumed that the OGM and the ICM tapes (not shown) are not driven when the power is supplied to the present device, and that the handset (not shown) of the telephone set 20 is on hook.

Operation for forwarding at normal speed, for instance, the OGM tape will be now described. If the security code switch SW2 is turned on before said operation, three-digit security code which is predetermined in a digital switch 32, for instance, "123" is entered by operating the keys on the dialing keypad 21.

Said security code is same as a security code for remote control operation described later, which is known only to an owner of the present device. Even if a third party operates the present telephone set erroneously for dialing when the security code switch SW2 is turned on, it is possible to prevent the telephone answering device in the telephone set from erroneously operating and leaking the message.

In order to forward the OGM tape at normal speed when the device is in the standby mode, the security code is entered as described above, then the key "1" on the dialing keypad 21 is pushed once. The universal DTMF oscillator generatos two frequencies, 697 Hz and 1209 Hz in response to pushing of said key. Said frequencies are turned into a suitable level by a resistor R21 and then amplified by the amplifier 24. The output thereof is applied to the tone decoder 25. The tone decoder 25 comprises an IC for tone decoder, a gate IC and a three-state buffer for preventing the confusion of output from a voice recognition section 33 described above. The output of the tone decoder is activated when the switch SW1 slides to the left slide as shown in the figure. Thus while the DTMF tone of the key "1" is being applied to the tone decoder, a H level signal is output from an output terminal (1) of the tone decoder 25 and the interrupt is supplied to the CPU through the OR gate G-4. At the same time, the output thereof turns the input terminal D80 into H level through the buffer G-1.

The program not shown checks how many times the input terminal D80 is turned into H level in a predetermined period of time, for instance, within 1 second (described later). If the input terminal D80 is turned into H level once, the output ports P20 and P22 are turned into H level, the solenoid PWD. SD1 and the motor M1 is energized and the OGM tape is forwarded at normal speed.

If the input terminal D80 is turned into H level twice in the predetermined period of time, the OGM is rewinded. If said terminal is turned into H level three times or more, the OGM tape is fast forwarded.

When the key "3" on the dialing keypad 21 is pushed, the DTMF oscillator 22 generates two frequencies, 697 Hz and 1477 Hz. Said frequencies are amplified by the amplifier 24 and an output terminal (3) of the tone decoder 25 is turned into H level. Thus the input terminal D82 of the CPU is turned into H level by the output thereof through the buffer G-3. In the same way as in case of above input terminal D80, it is checked how many times the input terminal D82 is turned into H level so that the ICM tape is controlled to forward at normal speed, rewind and fast forward.

Said predetermined period of time for 1 second is initialized to newly set a period of 1 second each time the key on the dialing key 21 is pushed, so that it is possible to easily operate, also in the remote control operation described later.

When the key "2" on the dialing keypad 21 is pushed, the DTMF oscillator 22 generates two frequencies, 697 Hz and 1336 Hz. An output terminal (2) of the tone decoder 25 is turned into H level through the amplifier 24. Thus, when the input terminal D81 of the CPU is turned into H level through the buffer G-2, the program flickers an light-emitting diode 32 (AUTO), for instance, for 1.5 seconds. Or intermittent signal is generated by the output port P27 and amplified by a speaker SP through an analog switch G-14 and amplifiers 30 and 31.

While the light-emitting diode is flickering as described above, if the key "1" on the dialing keypad 21 is pushed once the OGM tape is set to the recording mode, and if the key "3" is pushed once the ICM tape is set to the recording mode. When the keys "1" and "3" are pushed in the predetermined time in the same way in the prior art, the tapes can be erased in the rewind or fast forward mode.

If any button is not pushed any more when the light-emitting diode 32 (AUTO) is flickering as described above, the device is set to the standby mode for automatic answering and recording in the same way as in the prior art. From this time the light-emitting diode 32 is lighting up continuously to indicate that the device in in the standby mode. Similarly, when the OGM tape is rewinded and reached to the beginning position thereof, a light-emitting diode 33 (READY) is lit up.

If a predetermined period of time, for instance, 30 seconds has elapsed after the device is set to the standby mode as described above or the OGM and the ICM tapes stop, the entering of security code is cleared. So the security code should be entered again by pushing keys on the dialing keypad 21 for next operation.

Operations in the automatic answering and recording mode will be described.

When an incoming call is received in the standby mode, the ringing signal is detected by the ringing circuit 26 and inputted into the input terminal TEST1 of the CPU through an OR gate G-5. The input terminal TEST1 which is connected to a counter in the CPU counts the number of AC waves of the ringing signal. If it is decided to be ringing signal, the output port P26 is turned into H level and the relay Y-1 is kept energized. The telephone line is engaged through a contact y1-1 of the relay Y-1.

Accordingly, the ringing signal stops and the off-hook mode is established. At the same time, the output ports P20 and P22 are turned into H level and the solenoid FWD.SD1 and the motor M1 are energized to forward the OGM tape (not shown) at normal speed.

The OGM is played back by the recording/playback head RPH-1 and reached to a line transformer LT through the switching circuit 29, a pre-amplifier 30 and an analog switch G-13 (energized by the program) to be sent out to the calling party.

When the sending of the OGM is completed, the DTMF tone of the key "1" is recorded for a short period of time at the end of the OGM because the key "1" is pushed at the stop of the recording. When said DTMF tone is detected by the CPU through the line transformer LT, a resistor R22, the amplifier 24 and the tone decoder 25, the OGM tape stops and the ICM tape is driven in the recording mode.

Accordingly, the ICM from the calling party reaches to the recording/playback head RPH-2 through the line transformer LT, the analog switch G-14 turned on by the program, the pre-amplifier 30 and the switching circuit 29 switched to the recording mode by the program. Then the ICM is recorded on the ICM tape.

When the calling party hangs up after speaking his message, the line voltage changes. The line voltage change is detected by the CPU through the ringing circuit 26 and the OR gate G-5, and then the relay Y-1 is de-energized to disengage the telephone line. At the same time, the ICM tape stops and then the OGM tape is rewinded to the beginning position, so that the device returns to the standby mode.

Remote control operation by the owner at remote location will be now described. The present device is called by the owner from the outside push phone.

Three-digit security code predetermined by the digital switch 32 is sent out to the device by push phone button operation during the OGM or after the ICM tape is switched to the recording mode.

If the security code sent by the owner doesn't coincide with the presetermined security code, the device returns to the standby mode. If said two security codes coincide, the OGM or ICM tape stops and the device is ready for receiving the remote control signal for next operation.

Remote control operation thereafter is same as above manual operation at home, also with same keys on the keypad. More particularly, in order to play hack the ICM recorded on the ICM tape, the key "3" of the outside push phone is pushed successively twice to rewind the ICM tape. In response to said pushing, the ICM tape is rewinded to and stops at the beginning position of the tape or of the ICM which is not played back yet. In order to stop the ICM tape during rewinding, the key "3" is pushed once.

In order to play back the ICM tape, the key "3" on the push phone is pushed once after the ICM tape stops as described above. In order to stop the playback of the ICM tape, the key "3" is pushed once. Or it is possible to automatically stop the ICM tpae at the end position of the ICM if said end position is memorized into a memory of the CPU.

In order to switch to the recording mode, the key "2" on the push phone is pushed once. In above manual operation the light-emitting diode 32 flickers; whereas in the remote control operation the intermittent signal is output for 1. 5 seconds from the output port P27 of the CPU. While said intermittent signal is being heard, if the key "1" on the push phone is pushed once, the OGM tape is switched to the recording mode and if the key "3" is pushed once, the ICM tape is switched to the recording mode.

In the OGM tape recording mode, the OGM can be recorded again. In the ICM tape recording mode, the index message of date, time or the like can be recorded by the owner after all the ICMs are played back.

As described above, the present embodiment uses the same operation as in the prior art Japan S60-230754 A. However, it is not necessary to always use said operation. It is possible to use any key on the dialing keypad for each operation to easily operate for instance, the key "1" for the ICM tape playback and stop thereof, the key "3" for the ICM tape back space, the key "7" for the OGM recording and stop thereof and the key "9" for the OGM playback and stop thereof. Of course, the keys are used commonly for the remote control operation and the manual operation at home according to the purpose of the present invention.

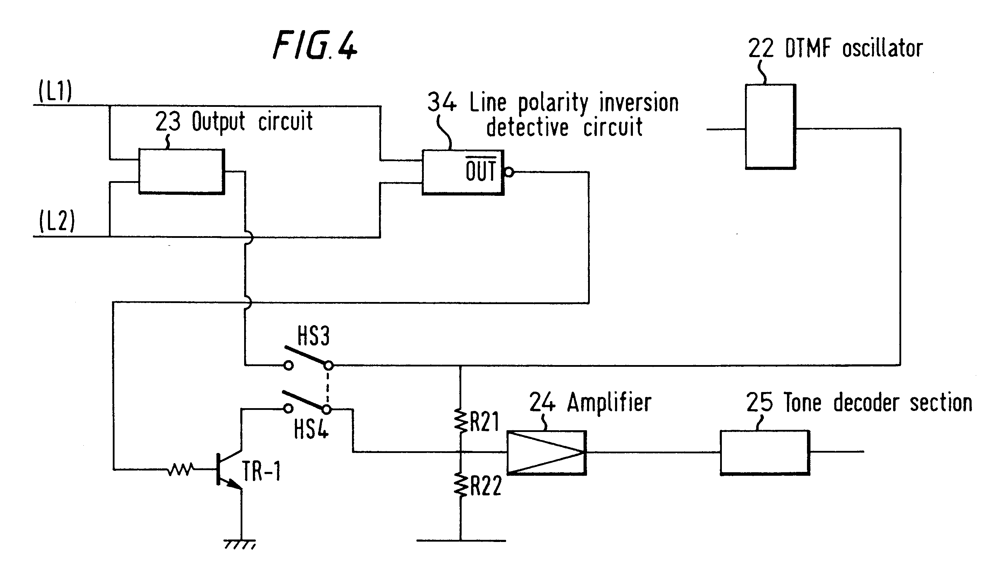

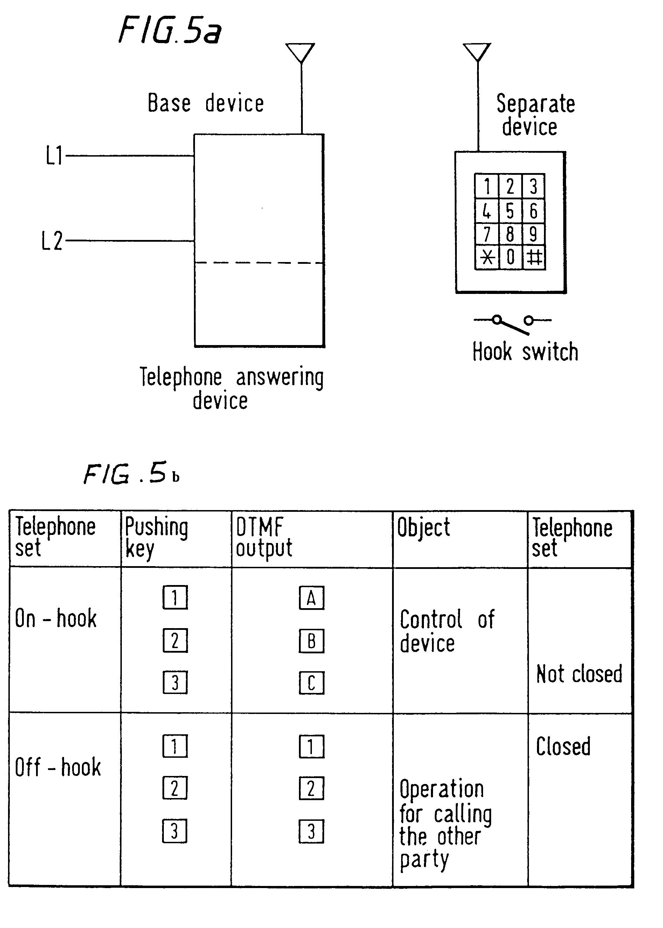

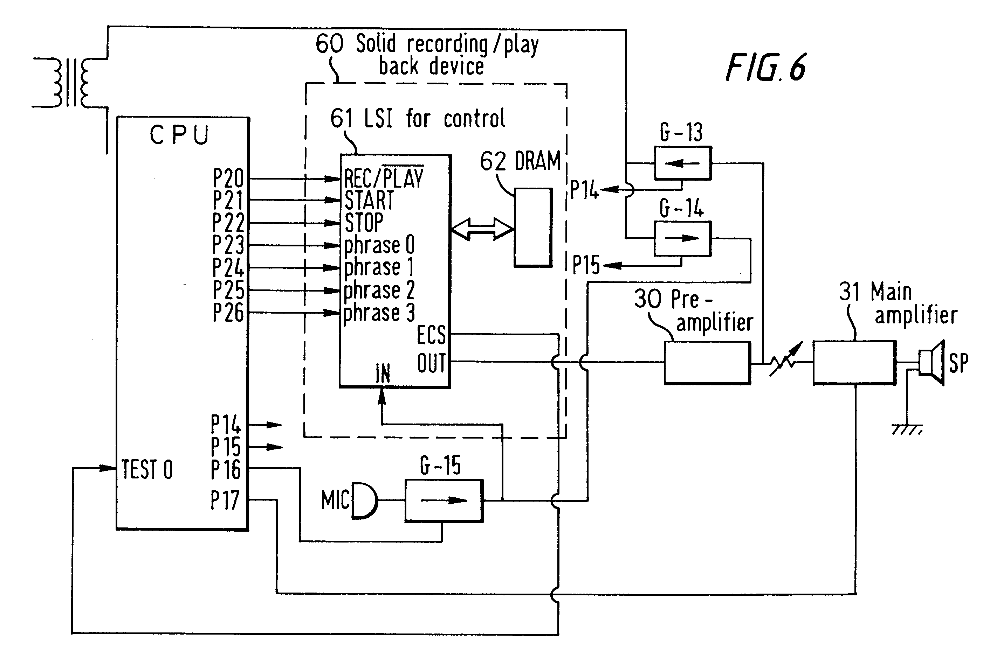

This device controls the device in the telephone set by the tone of the push phone as above. However, it is improper that the device in the telephone set is miss-operated by the dial operation when the other party is called. Accordingly, this invention considers how to cope with the above problem. Namely, in the Figure 2, when the hand set (not shown) of the telephone set 20 is picked up to operate the dial, the hook switches HS3, HS4 are closed. The output from the DTMF circuit 22 which oscillates by operation of the dial key 21 by the hook switch HS3, is input to the output circuit 23, and is output to the telephone line, after this output is amplified by the output circuit 23. The input side of the amplifier 24 is grounded by the hook switch HS4, as a result, the output from the DTMF circuit is not input to the tone decoder section 25. The device in the telephone set, in this example, the telephone answering device is not miss-operated. But, in the above example, for example when the conversation of each other is recorded on the receiving tape, after the other party is called and the talking over the telephone is set, the DTMF tone is not input in the tone decoder 25. Accordingly, it is impossible to control the ICM tape. The Figure 4 is a circuit example which solves the above problem. The device in the telephone set is operated by the dial operation to call the other party from the device. After the other party responds and talking over the telephone is set, the device in the telephone set can be controlled by key operation of push phone by the party. In the above Figure 4, a circuit and a part which are added in the Figure 2 are explained as follows. 34 is a line polarity inversion detective circuit. When the condition of talking over the telephone is set by inverting polarity or telephone line by the response from the other party, the output OUT changes from H level to L level, and the output OUT returns to H level by the on-hook by the other party. This circuit is made of various circuits which use an op -amplifier or a photocoupler etc. TR-1 means a transistor. The transistor TR-1 keeps a condition of ON by an output from the line polarity inversion detective circuit 34, except in condition of talking over the telephone. Accordingly, when the handset (not shown) is picked up from the device to call the other party, the hook switch HS3, HS4 are closed, and the transistor TR-1 keeps a condition of ON by the output from the line polarity inversion detective circuit 34 while dialing operation. As a result, the input side of the amplifier 24 is grounded through the closed hook switch HS4. As a result, the DTMF tone by dialing operation does not reach the tone decoder 25, and the device in the telephone set is not missoperated. In condition of talking over the telephone where the output from the line polarity inversion detective circuit 34 changes from H level to L level, the transistor TR-1 is changed to the condition of OFF. As a result, the amplifier 24 becomes active, the DTMF tone by key operation of the push phone by the party, reaches CPU (central processing unit) through the tone decoder 25. As a result, the DTMF tone can control the device in the telephone set. In the same principle as described above, it is possible to arrange that even if the incoming call is received and the off-hook mode is established, said reception of incoming call can be memorized and device in the telephone set can be controlled in response to the operation of either the calling party of the called party while the called party hangs on, more particularly during the conversation between the parties. It is also possible to arrange a special recording button as a substitute or above push phone (ten-key) buttons, which is operated only during above two-way conversation, so as to stop the two-way conversation recording when the off-hook mode is released. The device has a shortening dial section. A code which controls a dial number or the device in the telephone set can be memorized in a memory in the CPU. The code means, for example a secret code when a remote controlling operation starts. In this example, the answering tape and the receiving tape are controlled by pushing times of buttons "1", "3", but a specific code, for example the specific code of eight figures which resembles the secret number, is assigned to various controls, and it is possible to do various tests or various remote controlling operations by the above specific code. And further, it is possible to assign the special code for playing back or recording specific message. And also, the special code is memorized in the shortening dial section, as a result, it is possible to put to practical use or to test of remote control by touching once or twice the push phone (dial key). In order to register the secret code or the special code in the shortening dial section, the button in the dial button section 21 is pushed in order of "X*YYY". "X" means number which shows order of registration by key 0 - 9. "YYY" means, for example the secret number or the special code of eight figures of 0 - 9. When a program detects the DTMF tone of "*" which is made by pushing the above keys, the program regards the number input before as the number which means the registration number, and designates a memory field assigned by the registration number in the CPU. And the number of eight figures which is input after "*", is memorized in the memory field. In order to read out the code memorized as above, buttons of "X", "#" are pushed. "X" means the said registration number. When the program detects the DTMF tone of "X", "#", the address of memory is designated by contents of the DTMF tone. The code of eight figures is read out, and is output by the DTMF tone. If ten buttons are set at the input port (not shown) in the CPU, read out of the shortening dial is done by touching once. And this invention is available for a cordless phone. In the conventional cordless phone, a base device and a separate device are set separately. When a calling is received by the base device, a bell in the base device or the separate device is acted. A caller can talk over the telephone through the base device by the on-hook. Accordingly, in receiving or transmitting callings, an electromagnetic wave from the separate device by the on-hook operation of the separate device, is received by the base device, and the telephone line L1, L2 are closed. As a result, the device in the base device, for example only telephone answering device could not be controlled by the separate device when it is not concerned with the telephone line. This invention offers two ideas to solve the above problem. First idea is that an electromagnetic wave which is modulated by the DTMF tone is output, when the key "1". "2". "3" are pushed, and the power switch (not shown) becomes ON in condition of the on-hook where the separate device shown in the Figure 5a opens. When the key "1" was pushed, two frequencies of 697Hz and 1209Hz were usually output. But in the above condition of the on-hook, an oscillator "A" is connected by a switching circuit (not shown) connected with the above hook-switch. As a result, two frequencies of 697Hz and 1633Hz are output. This device is not yet used in the push phone in Japan. This device is the same device as the device having one key, for example the key A for two frequencies. When the key "2" is pushed, two frequencies for the key "B" are output. When the key "#" is pushed, two frequencies for the key "C" are output (the Figure 5b). When the each output by "A"-"C" is decoded by the tone decoder in the base device, the telephone answering device is controlled as the above without closing the telephone lines L1, L2. Of course, when the keys "1" - "3" are pushed in condition of on-hook where the hook switch is closed, the corresponding DTMF tone is output (the Figure 5b). And when an owner remote-controls the device by using the push phone in outside, the DTMF tone by "A" - "C" are not output. In this case, the device is programmed so that the remote control operation is done by the DTMF tone of "1" - "3". And this device has a voice recognize section as shown in the Figure 2. A specific voice or other designation or a secret number or a shortening dial is set previously to be registered substituting for the DTMF tone of "1" - "3" by changing the switch SW 1 to right side. As a result, the OGM tape and the ICM tape can be controlled like controlling by the DTMF tone. The second idea is that, for example when "#" on the separate device in the cordless telephone is pushed twice, sending an electric wave between the base deice and the separate device is kept, and communication between the base device and the telephone line is cut. In the obove example of this invention, it is possible to input a calling from outside in operating without relating with the telephone line. In the above condition, the hook-switch HS2 contacts with a ringer circuit in condition of the oh-hook of the telephone set. As a result, the telephone set is in the condition which receives a calling signal. If the other party hopes to talk over the telephone, after the telephone answering device is stopped, a receiver (not shown) is set at the off-hook. It is possible to talk over the telephone. If the other party does not hope to talk over the telephone, the other party lets the telephone answering device alone, or the other party changes the telephone answering device to the condition of automatic answering/recording. It is possible to let the telephone device respond to the received calling, after head of the OGM tape or the ICM tape is picked up. And in the cordless phone, when the device in the base device is controlled by the separate device, a receiving signal must be received at least. The tape is used in this example as above, but in a solid recording/playback device, an action corresponding to rewinding etc. is acted in a moment. Accordingly, when operation of the key is done continuously twice by using the solid recording/playback device. Rewinding of one message is done and the solid recording/playback device, skipping of one message is done and the solid recording/playback device stops. The Figure 6 shows definite circuit of solid recording/playback device. 60 is the solid recording/playback device. The solid recording/playback device 60 is made of LSI (large scale integration) for control 61, and DRAM (dynamic random access memory) 62. T6668 made by TOSHIBA is used as the above LSI for control, and T6668 has been already on the market. Main terminal is explained. "REC/PLAY" is a changing terminal for recording, play back. The changing terminal is set at a recording mode by H level and a play back mode by L level. And "START" is a terminal for start of operation of recording playback. "STOP" is a terminal for stop of operation of recording, playback. A phrase 0 - phrase 4 is a terminal to select a phrase. One phrase is made by 4 bits, accordingly it is possible to use 16 phrases maximum. "IN" is input terminal of voice. "OUT" is output terminal of voice. "EOS" is output terminal which outputs H level, when end of each phrase is detected. In order to record the answering message in the solid recording/playback device, the same operation as the said operation of tape is done. Namely, after the key "2" in the dial key 21 in the Figure 1 is pushed, the key "3" is pushed. And the program sets the output port "P23, P24, P25, P26" to "1000", and first phrase is assigned as the answering message. At the same time, in condition where the output port P20 is set at H level, a recording mode is selected. At the same time, the output port P16 is set at H level, an analog switch G-15 is set at "ON" and the microphone MIC is set. In condition of the above, when a start pulse from the output port P21 is output, the answering message which is talked to the microphone MIC is input to the LSI for control 61 through the input terminal IN and digital voice which is changed by A/D converter set in the LSI for control, is stored in the DRAM 62. After set of the answering message finishes, the key "1" is pushed once as setting by the tape. When the program detects the pushing, a stop pulse from the output port P22 is output, and solves the said recording operation. When the start pulse or the stop pulse is output, the LSI for control 61 memorized the start address, the stop address of each phrase in the memory set in the LSI for control, and when full of the stop address or of the DRAM is detected,the output terminal EOS (end of speech) is set at H level. Accordingly, as the above, key "1" is pushed once to confirm the answering message recorded as the above. As a result, the output port P20 is set at L level, and changes to playback mode. As the above, when the start pulse is output after the first phrase is selected, the answering message is played back from the head of message, and the answering message is spoken by the speaker SP through the output terminal OUT, the pre-amplifier 30 and the main amplifier 31. And when the answering message gets to the and, the LSI for control sets the output terminal EOS at H level, and stops the said playback operation automatically. In automatic answering recording mode, in order to send the answering message, the output played back as the above is sent to telephone line through the analog switch G-13. And in order to record the message from the other party,next phrase is selected by the output port P23 - P26 and the analog switch G-14 is set at ON. It is possible to record by same way as the said recording of the answering message. Namely,when the other party sets the deice at the on-hook, the stop pulse is output. In remote control, in order to playback the receiving message, after next phrase of the answering message is designated, the start pulse is output in playback mode. When the phrase reaches the end, the output terminal EOS is set at H level (the output terminal EOS is returns to L level by the start pulse). When the H level is detected by the CPU, the program changes the phrase to the next phrase, and plays back all receiving message automatically. In the above example, the telephone answering device as the device in the telephone set is explained, but this application does not limit the telephone answering device, for example it is possible to use in the transmission of information which is shown in "THE SYSTEM OF RECEIVING INFORMATION BY USING PUSH PHONE" (Japanese Patent Application No. 58-188732, Publication No. 60-80354) by the same applicant. Namely, the following explanation is not shown in the figure, but in the condition of the on-hook of the telephone set, on easy sentence made of the number or the alphabet is made by key operation of the dial key, and is memorized in a memory. And the telephone set is set at the on-hook and the other party is called by dial operation. When the talking over the telephone is set as the above, it is possible to control the device in the telephone set. And when one of the dial key or other specific key is pushed, the sentence made of the number or the alphabet memorized in the memory, is set to the other party automatically. It is possible to apply this invention to the above device. As the above, it is possible to make various signals for control the solid recording/playback device having a function of solid recording set in the device in the telephone set or the telephone answering device or the recording/playback device having small mechanical recording/playback device by function of the on-hook dial and the off-hook dial of the conventional telephone set having various functions. As a result, a part of machinery becomes small and when each function of the telephone having various functions which is changing to the solid recording device without tape, is controlled, the buttons on the surface of the telephone having various functions must have various functions, for example a function of re-dial, a function of loudening voice, a function of shortening dial. This invention presents means for reducing the minimum a number of the button in general by using an operating button of the device in common. Scope of practical application is wide. Namely,in the example, when the device in the telephone set is controlled manual or the device in the telephone set is controlled by remote control, the buttons "1,'2", "3" are used, however, the example shows that the invention can be used by distributing all of ten-key to operate complex operation for specific device. However,the telephone answering device in the telephone set which is on the market has difference between the operation by remote-control and the operation manual. As a result, the operator needed time to learn how to control the device. This was a big problem that diffusion of the device was hindered. Accordingly, the principle of this invention can cope with the above problem. This invention is very effective practically.

## Claims

1. Telephone equipment having means (21-23) of dialling using dual-tone multifrequency (DTMF) tone signals, and incorporating an additional device that can be controlled by remote control by signals from an external source over an outside telephone line (L1 & L2) by pushing DTMF tone buttons of the external source, and manually and independently of the outside telephone line by pushing DTMF tone buttons (21) of said equipment of the same numeral or sign as those for remote control operation of the additional device over the outside telephone line (L1 & L2), characterised by:
means (fig. 4; 34, TR-1, HS3, HS4) for enabling said additional device to be selectively controlled by remote control from the remote source and by the pushing of the DTMF tone buttons (21) of said telephone equipment whilst a talking circuit on the telephone line (L1 & L2) is maintained between the telephone equipment and the remote source.

2. The telephone equipment of claim 1, wherein said equipment includes a standard telephone set (20).

3. The telephone equipment of claim 1, wherein said equipment includes a cordless telephone.

4. The telephone equipment of claim 1, including means (32, 33 or 30 & 31) for visually or audibly indicating when a particular DTMF tone button (21) is pushed.

5. The telephone equipment of claim 1, wherein said additional device comprises a telephone answering device (TAD), wherein said equipment includes means (CPU) for enabling said TAD to be controlled by pushing special DTMF buttons (21) for one-touch, or speed, dialling.

6. The telephone equipment of claim 1, wherein said additional device includes voice recognition circuitry (33) for controlling said additional device in response to a voice command.

7. The telephone equipment of claim 1, wherein said additional device comprises a telephone answering device having a switch for enabling the recording of a two-way conversation between a calling party and a called party, and further including means for automatically turning off said switch when the handset of the telephone equipment is returned on-hook after the conversation is completed.

8. The telephone equipment of claim 1 including circuitry (fig.4: R22, HS4, TR-1, & 34) for automatically making the additional device independent of the outside telephone line (L1 & L2) during a dialling operation of said telephone equipment for placing an outgoing call, to prevent actuation of control functions of the additional device by the outgoing DTMF dialling signals.

9. The telephone equipment of any one of the preceding claims including an off-hook switch by which means outside dialling is enabled while the handset is on-hook.

10. The telephone equipment as claimed in any one of the preceding claims, said equipment comprising:
DTMF signalling means (21,22) including the DTMF tone buttons (21) of said equipment and a DTMF tone oscillator (22) responsive thereto;
tone decoder means (R21,R22, 24 & 25), connected at input both to said DTMF signalling means (21,22) and to line input circuit means (L1, L2, y1-1, LT), for controlling said additional device and a first hook-switch (HS3) connected between said DTMF signalling means (21,22) and line output circuit means (23) for connecting said DTMF signalling means (21,22) to the outside telephone line (L1 & L2) when said equipment is in its off-hook mode;
said equipment being characterised by:
detector means (34) connectable to the outside telephone line (L1 & L2) for detecting whether or not a talking circuit is maintained between said telephone equipment and the remote source; and
tone decoder means control (HS4, TR-1) which is responsive to said detector means (34), is operable to disable said tone decoder means (R21, R22, 24 & 25) while said equipment is in its off-hook mode and the talking circuit is not established, and is operable to enable said tone decoder means (R21, R22, 24 & 25) while said equipment is in its off-hook mode and the talking circuit is established and is being maintained;
said detector means (34) and said tone decoder means control (HS4, TR-1) providing thus said means for enabling said additional device to be selectively controlled as aforesaid.

11. The telephone equipment of claim 10 wherein:
said detector means (34) is provided by a line polarity inversion detective circuit (34).

12. The telephone equipment as claimed in either one of the preceding claims 10 and 11 wherein:
said tone decoder means control (HS4, TR-1) comprises:
a second hook switch (HS4); and
a transistor switch (TR-1) arranged to be controlled by said detector means (34); with said second hook switch (HS4) and said transistor switch (TR-1) being connected in series between input of said tone decoder means (R21, R22, 24 & 25) and equipment earth.

## Patentansprüche

1. Fernsprechvorrichtung, die Mehrfrequenz- (MFV-) Tonsignale verwendende Wähleinrichtungen (21-23) aufweist und eine zusätzliche Einrichtung enthält, die durch Fernsteuerung durch Signale von einer externen Quelle über eine Außen-Fernsprech-Anschlußleitung (L1 & L2) durch Drücken von MFV-Tontasten der externen Quelle und manuell und unabhängig von der Außen-Fernsprech-Anschlußleitung durch Drücken von MFV-Tontasten (21) der Vorrichtung mit der gleichen Zahl oder mit dem gleichen Zeichen, wie jenen für die Fernsteuerungsfunktion der zusätzlichen Einrichtung über die Außen-Fernsprech-Anschlußleitung (L1 & L2), gesteuert werden kann,
gekennzeichnet durch:
eine Einrichtung (Fig. 4; 34, TR-1, HS3, HS4), die es ermöglicht, daß die zusätzliche Einrichtung wahlweise durch Fernsteuerung von der entfernten Quelle und durch das Drücken der MFV-Tontasten (21) der Fernsprechvorrichtung gesteuert wird, während eine Sprechschaltung an der Fernsprech-Anschlußleitung (L1 & L2) zwischen der Fernsprechvorrichtung und der entfernten Quelle aufrechterhalten wird.

2. Die Fernsprechvorrichtung nach Anspruch 1, wobei die Vorrichtung ein Standard-Fernsprechgerät (20) enthält.

3. Die Fernsprechvorrichtung nach Anspruch 1, wobei die Vorrichtung ein schnurloses Fernsprechgerät enthält.

4. Die Fernsprechvorrichtung nach Anspruch 1, die Einrichtungen (32, 33 oder 30 & 31) für eine sichtbare oder hörbare Anzeige beim Drücken einer besonderen MFV-Tontaste (21) enthält.

5. Die Fernsprechvorrichtung nach Anspruch 1, wobei die zusätzliche Einrichtung eine Anrufbeantwortungseinrichtung (TAD) aufweist und wobei die Vorrichtung eine Einrichtung (CPU) enthält, die es ermöglicht, daß die Anrufbeantwortungseinrichtung (TAD) durch Drücken bestimmter MFV-Tasten (21) für Einzel-Berührung oder Kurzwahl gesteuert wird.

6. Die Fernsprechvorrichtung nach Anspruch 1, wobei die zusätzliche Einrichtung eine Spracherkennungsschaltung (33) zum Steuern der zusätzlichen Einrichtung in Erwiderung auf einen Sprachbefehl enthält.

7. Die Fernsprechvorrichtung nach Anspruch 1, wobei die zusätzliche Einrichtung eine Anrufbeanwortungseinrichtung enthält, die einen Schalter aufweist, der die Aufzeichnung eines zweiseitigen Informationsaustausches zwischen einem rufenden Teilnehmer und einem gerufenen Teilnehmer ermöglicht, und die ferner Einrichtungen zum automatischen Ausschalten des Schalters enthält, wenn der Handapparat der Fernsprechvorrichtung nach Abschluß des Informationsaustausches zurückgehängt wird.

8. Die Fernsprechvorrichtung nach Anspruch 1, die eine Schaltung (Fig. 4: R 22, HS4, TR-1 & 34) zum automatischen Unabhängigmachen der zusätzlichen Einrichtung von der Außen-Fernsprach-Anschlußleitung (L1 & L2) während eines Wählbetriebes der Fernsprachvorrichtung zum Anmelden eines abgehenden Rufes enthält, um ein Auslösen der Steuerfunktionen der zusätzlichen Einrichtung durch die auslaufenden MFV-Wählsignale zu verhindern.

9. Die Fernsprechvorrichtung nach einem der vorstehenden Ansprüche, die einen Aushängezustands-Schalter enthält, durch den eine Auswärtswahl ermöglicht wird, während der Handapparat eingehängt ist.

10. Die Fernsprachvorrichtung nach einem der vorstehenden Ansprüche, wobei die Vorrichtung aufweist:
eine MFV-Signalisierungseinrichtung (21, 22), die die MFV-Tontasten (21) dar Vorrichtung und einen darauf ansprechenden MFV-Tonoszillator (22) enthält;
eine Tondekodiereinrichtung (R21, R22, 24 & 25), deren Eingang sowohl mit der MFV-Signalisierungseinrichtung (21, 22) als auch mit einer Leitungseingangs-Schaltungseinrichtung (L1, L2, y1-1, LT) zum Steuern der zusätzlichen Einrichtung verbunden ist, und einem ersten Gabelschalter (HS3), der zwischen die MVF-Signalisierungseinrichtung (21, 22) und eine Leitungsausgangs-Schaltungseinrichtung (23) zum Verbinden der MFV-Signalisierungseinrichtung (21, 22) mit der Außen-Fernsprach-Anschlußleitung (L1 & L2) geschaltet ist, wenn sich die Vorrichtung in ihrem Aushängezustand befindet;
die Vorrichtung ist gekennzeichnet durch:
eine Erfassungseinrichtung (34) die mit der Außen-Fernsprech-Anschlußleitung (L1 & L2) zum Erfassen, ob eine Sprechschaltung zwischen dar Fernsprechvorrichtung und der entfernten Quelle aufrecht erhalten wird oder nicht, verbunden werden kann, und eine auf die Erfassungseinrichtung (34) ansprechende Tondekodier-Steuereinrichtung (HS4, TR-1), die zum Ausschalten dar Tondekodiereinrichtung (R21, R22, 24 & 25) betätigbar ist, während sich die Vorrichtung in ihrem Aushängezustand befindet und die Sprachschaltung nicht aufgebaut ist, und die zum Einschalten der Tondekodiereinrichtung (R21, R22, 24 & 25) betätigbar ist, während sich die Vorrichtung in ihrem Aushängezustand befindet und die Sprechschaltung aufgebaut ist und aufrechterhalten wird;
wobei die Erfassungseinrichtung (34) und die Tondekodier-Steuereinrichtung (HS4, TR-1) somit die eingangserwähnte Einrichtung vorsehen, die das wahlweise Steuern der zusätzlichen Einrichtung ermöglicht.

11. Die Fernsprechvorrichtung nach Anspruch 10, wobei: die Erfassungseinrichtung (34) als Anschlußpolaritätsumkehr-Erfassungsschaltung (34) vorgesehen ist.

12. Die Fernsprechvorrichtung nach Anspruch 10 oder 11, wobei:
die Tondekodier-Steuereinrichtung (HS4, TR-1) aufweist:
einen zweiten Gabelschalter (HS4); und
eine Transistorschalteinrichtung (TR-1), die von der Erfassungseinrichtung (34) angesteuert wird, wobei der zweite Gabelschaltar (HS4) und die Transistorschalteinrichtung (TR-1) in Reihe zwischen den Eingang der Tondekodiereinrichtung (R21, R22, 24 & 25) und die Erdung der Vorrichtung geschaltet sind.

## Revendications

1. Matériel téléphonique comportant des moyens (21-23) de numérotation utilisant des signaux de tonalité à multiplication de fréquence à partir de deux sons (DTMF), et comprenant un dispositif supplémentaire qui peut être commandé par une commande à distance à l'aide de signaux provenant d'une source extérieure par une ligne téléphonique extérieure (L1 & L2) en appuyant sur des boutons de tonalité DTMF de la source extérieure, et manuellement et indépendamment de la ligne téléphonique extérieure en appuyant sur des boutons de tonalité DTMF (21) dudit matériel de même numéro ou signe que ceux pour l'opération de commande à distance du dispositif supplémentaire, par la ligne téléphonique extérieure (L1 & L2), caractérisé par :
des moyens (figure 4 ; 34, TR-1, HS3, HS4) pour permettre audit dispositif extérieur d'être commandé sélectivement par une commande à distance à partir de la source éloignée et en appuyant sur les boutons de tonalité DTMF (21) dudit matériel téléphonique tandis qu'un circuit de conversation sur la ligne téléphonique (L1 & L2) est maintenu entre le matériel téléphonique et la source éloignée.

2. Matériel téléphonique selon la revendication 1, dans lequel ledit matériel comprend un appareil téléphonique classique (20).

3. Matériel téléphonique selon la revendication 1, dans lequel ledit matériel comprend un téléphone sans fil.

4. Matériel téléphonique selon la revendication 1, comprenant des moyens (32, 33 ou 30 et 31) destinés à indiquer visuellement ou de façon sonore qu'un bouton de tonalité DTMF particulier (21) est enfoncé.

5. Matériel téléphonique selon la revendication 1, dans lequel ledit dispositif supplémentaire comprend un répondeur téléphonique (TAD), dans lequel ledit matériel comprend un moyen (CPU) destiné à autoriser ledit TAD à être commandé en appuyant sur des boutons DTMF spéciaux (21) pour une numérotation à une touche, ou rapide.

6. Matériel téléphonique selon la revendication 1, dans lequel ledit dispositif supplémentaire comprend un circuit (33) de reconnaissance de la parole destiné à commander ledit dispositif supplémentaire en réponse à un ordre vocal.

7. Matériel téléphonique selon la revendication 1, dans lequel ledit dispositif supplémentaire comprend un répondeur téléphonique ayant un commutateur destiné à autoriser l'enregistrement d'une conversation bidirectionnelle entre un demandeur et un demandé, et comprenant en outre un moyen destiné à ouvrir automatiquement ledit commutateur lorsque le combiné du matériel téléphonique est raccroché une fois la conversation achevée.

8. Matériel téléphonique selon la revendication 1, comprenant des circuits (figure 4 : R22, HS4, TR-1, & 34) destinés à rendre automatiquement le dispositif supplémentaire indépendant de la ligne téléphonique extérieure (L1 & L2) durant une opération de numérotation dudit matériel téléphonique pour placer un appel de départ, afin d'empêcher l'actionnement de fonctions de commande du dispositif supplémentaire par les signaux de numérotation DTMF de départ.

9. Matériel téléphonique selon l'une quelconque des revendications précédentes, comprenant un interrupteur de décrochage au moyen duquel une numérotation de l'extérieur est autorisée tandis que le combiné est accroché.

10. Matériel téléphonique selon l'une quelconque des revendications précédentes, ledit matériel comportant :
des moyens de signalisation DTMF (21, 22) comprenant les boutons de tonalité DTMF (21) dudit matériel et un oscillateur à tonalité DTMF (22) qui leur réagit ;
des moyens décodeurs de tonalité (R21, R22, 24 & 25), connectés en entrée à la fois auxdits moyens de signalisation DTMF (21, 22) et à des moyens (L1, L2, y1-1, LT) de circuit d'entrée de ligne, pour commander ledit dispositif supplémentaire, et un premier interrupteur (HS3) d'accrochage connecté entre lesdits moyens de signalisation DTMF (21, 22) et des moyens (23) de circuit de sortie de ligne pour connecter lesdits moyens de signalisation DTMF (21, 22) à la ligne téléphonique extérieure (L1 & L2) lorsque ledit matériel est dans son mode décroché.
ledit matériel étant caractérisé par :
un moyen détecteur (34) pouvant être connecté à la ligne téléphonique extérieure (L1 & L2) pour détecter si un circuit de conversation est maintenu ou non entre ledit matériel téléphonique et la source éloignée ; et
une commande (HS4, TR-1) des moyens décodeurs de tonalité qui réagit audit moyen détecteur (34), peut être mise en oeuvre pour invalider lesdits moyens décodeurs de tonalité (R21, R22, 24 & 25) tandis que ledit matériel est dans son mode décroché et que le circuit de conversation n'est pas établi, et qui peut être mise en oeuvre pour valider lesdits moyens décodeurs de tonalité (R21, R22, 24 & 25) tandis que ledit matériel est dans son mode décroché et que le circuit de conversation est établi et est maintenu ;
ledit moyen détecteur (34) et ladite commande (HS4, TR-1) des moyens décodeurs de tonalité constituant ainsi lesdits moyens destinés à autoriser ledit dispositif supplémentaire à être commandé sélectivement comme indiqué précédemment.

11. Matériel téléphonique selon la revendication 10, dans lequel :
ledit moyen détecteur (34) est fourni par un circuit (34) de détection d'inversion de polarité de ligne.

12. Matériel téléphonique selon l'une des revendications précédentes 10 et 11, dans lequel :
ladite commande (HS4, TR-1) des moyens décodeurs de tonalité comporte :
un second interrupteur (HS4) d'accrochage ; et
un commutateur à transistor (TR-1) agencé de façon à être commandé par ledit moyen détecteur (34) ; ledit second interrupteur (HS4) d'accrochage et ledit commutateur à transistor (TR-1) étant connectés en série entre l'entrée desdits moyens décodeurs de tonalité (R21, R22, 24 & 25) et la terre du matériel.
